# FASCICULE DE BREVET EUROPEEN

(11) **EP 4 074 091 B1**
(45) Date de publication et mention de la délivrance du brevet: **29.01.2025**
(21) Numéro de dépôt: 20845191.4
(22) Date de dépôt: 14.12.2020
(51) Int. Cl.: H04W 24/02

(54) **ADAPTATION SYNCHRONISEE D'UN SOUS-ENSEMBLE VIRTUEL D'UN RESEAU DEDIE A UN SERVICE**
SYNCHRONISIERTE ANPASSUNG EINER VIRTUELLEN TEILMENGE EINES EINEM DIENST ZUGEORDNETEN NETZWERKS
SYNCHRONISED ADAPTATION OF A VIRTUAL SUBSET OF A NETWORK DEDICATED TO A SERVICE

(30) Priorité: 13.12.2019 FR 1914422
(43) Date de publication de la demande: 19.10.2022
(73) Titulaire: Orange, 92130 Issy-les-Moulineaux (FR)
(72) Inventeur: GUIONNET, Chantal, 92326 Châtillon Cedex (FR); JUMPERTZ, Sylvie, 92326 Châtillon Cedex (FR); BENGUIGUI, Catherine, 92326 Châtillon Cedex (FR)
(74) Mandataire: Plasseraud IP
(86) Numéro de dépôt international: PCT/FR2020/052415
(87) Numéro de publication internationale: WO 2021/116634

(56) Documents cités:
- WO-A1-2018/200733
- US-A1- 2018 248 815
- HUAWEI: "Editorial change for use case reorganization", vol. SA WG5, no. West Palm Beach, Florida (US); 20170508 - 20170512, 28 April 2017 (2017-04-28), XP051269858, Retrieved from the Internet <URL:http://www.3gpp.org/ftp/tsg_sa/WG5_TM/TSGS5_113/Docs/> [retrieved on 20170428]

## Description

La présente description concerne le domaine des réseaux de télécommunication.

L'architecture des réseaux de télécommunication mobiles a jusqu'ici été standardisée. C'est en particulier le cas des réseaux mobiles dits « 2G », « 3G » et « 4G », dont les différentes architectures de réseau de télécommunication reposent traditionnellement sur des équipements bien spécifiques et dédiés à certaines fonctionnalités précises, que ce soit au niveau du réseau d'accès ou du cœur de réseau.

Le manque de flexibilité et d'évolutivité inhérent à ce type d'architecture conventionnelle a amené à envisager l'adoption d'architectures plus flexibles pour la prochaine génération de réseaux mobiles, dite « 5G », afin de pouvoir répondre rapidement à des demandes extrêmement diverses en terme de trafic ou de qualité de service.

Parmi les solutions envisagées, une des solutions repose sur une technique de découpage virtuel par tranche du réseau (« network slicing » en anglais). Les documents suivants mentionnent une exploitation d'un tel découpage virtuel du réseau :
- « Editorial change for use case reorganization », HUAWEI, 3GPP draft, S5-173143 PCR 28.801 Editorial change for use case reorganization, 3GPP, Mobile Competence Centre ; 650, Route des Lucioles ; F-06921 Sophia-Antipolis, SA WG5 , West Palm Beach, Florida (US) ; 20170508 - 20170512 (2017-04-28) ;
- WO 2018/200733 A1 ;
- US 2018/248815 A1.

Le concept de tranche du réseau est destiné à supporter des services de communication pour des besoins spécifiques, des utilisateurs spécifiques ou des terminaux spécifiques en appliquant des moyens adaptés de gestion de trafic.

Une tranche du réseau (ou slice en anglais) est définie du point de vue client par des valeurs de paramètres réseau permettant de répondre aux exigences liées au service à fournir. Les tranches du réseau déployées par un opérateur ne sont pas toutes composées des mêmes valeurs de paramètres réseau, voire des mêmes paramètres réseau, sachant que l'idée est d'adapter les tranches du réseau aux exigences d'usage liées à cette tranche du réseau. Une tranche du réseau permet ainsi de satisfaire la demande des utilisateurs suivant des critères fonctionnels, opérationnels et de performance différents, tels que le débit, la latence, le nombre de terminaux connectés, la couverture, le coût, etc.

A titre d'exemple, une tranche du réseau mise en œuvre liée aux services loT (« Internet of Things » en anglais) pourra nécessiter de gérer un grand nombre de connexion de terminaux mais un débit associé à chaque terminal plutôt faible. Selon un autre exemple, un service proposé à une clientèle professionnelle nécessite plutôt des paramètres avancés de sécurité et de disponibilité.

Chaque tranche réseau, vue par un tel utilisateur-client (ou « client » ci-après), est donc indépendante des autres tranches (ou « slices »). Chaque slice est donc l'équivalent d'un réseau privé virtuel, et son adaptation n'a en théorie aucun impact sur les caractéristiques des autres slices.

L'indépendance de tranches réseaux est donc une des forces de la 5G car elle permet au client de les voir, les gérer, les adapter une à une, selon le service auquel chacune est associée. Lorsqu'un utilisateur (typiquement un client grand compte) définit un service ou un produit global (e.g. une voiture connectée autonome) pour des clients finaux, celui-ci est en général constitué de plusieurs services fonctionnels différents, aussi nommés services élémentaires, et nécessite donc plusieurs tranches réseaux de caractéristiques différentes pour répondre à chacun de ces services indépendants.

L'adaptation ensuite d'une tranche réseau pour des besoins qui évoluent se fait alors de façon indépendante de celle des autres tranches réseaux.

Lorsque le besoin du service ou produit global, ou d'un client nécessite rapidement la modification de nombreuses tranches réseaux, cette indépendance entre tranches réseaux peut devenir un inconvénient plutôt qu'un avantage.

Le document mentionné ci-dessus *"*Editorial change for use case reorganization", 3GPP DRAFT; S5-173143, par HUAWEI, concerne la gestion et la modification de tranches de réseau, et divulgue la notion de partage entre deux tranches réseau en ce que les configurations de fonctions réseaux inter-tranches sont coordonnées.

La présente divulgation vient améliorer la situation.

Il est proposé un procédé d'adaptation synchronisée d'un sous-ensemble virtuel d'un réseau de télécommunication (R) dit « tranche du réseau », dédié à un service élémentaire d'un ensemble de services, un service global étant constitué par plusieurs services élémentaires auxquels des tranches respectives distinctes sont dédiées, le réseau de télécommunication (R) comprenant une pluralité de tranches du réseau, lesdites tranches étant paramétrées selon une pluralité de paramètres de configuration, le procédé comprenant au moins:
- modifier au moins un deuxième paramètre de configuration d'au moins une deuxième tranche dédiée à un deuxième service élémentaire d'un ensemble de services en fonction d'au moins une modification d'un premier paramètre de configuration d'une première tranche dédiée à un premier service élémentaire de l'ensemble de services.

Ainsi avantageusement, il est possible à partir de la modification d'un ou plusieurs paramètres de configuration d'une tranche réseau (dénommée aussi tranche du réseau, tranche de réseau ou tranche) d'un ensemble de tranches réseaux liées dans un ensemble de services, par exemple parce que liées à un service ou produit global, ou liées à un client, ou liées à un type de service, de modifier automatiquement et rapidement le paramétrage d'une pluralité de tranches réseaux de l'ensemble de tranches réseaux. Plus précisément, il n'est pas nécessaire d'intervenir unitairement sur chacune des tranches réseaux liées, qui requiert une adaptation du paramétrage, par rebond.

De manière avantageuse, le procédé permet de réduire le temps de latence d'adaptation de tranches réseaux dépendantes d'une tranche réseau dont un paramètre de configuration vient d'être modifié.

Un autre avantage du procédé est de réduire les coûts associés aux ressources mis en œuvre lors d'une modification d'une tranche réseau. En effet, de manière générale, lors de la modification d'un paramètre de configuration d'une tranche réseau, il est nécessaire de surveiller les conséquences par rebond de cette modification sur les autres tranches réseaux quelles qu'elles soient, puis il est ensuite nécessaire de calculer une modification d'une ou plusieurs autres tranches réseaux. Le procédé de la présente description ne nécessite avantageusement que de surveiller une modification d'un paramètre de configuration d'une première tranche et d'en déduire ensuite la modification d'un paramètre de configuration d'une deuxième tranche réduisant ainsi fortement les ressources de surveillance et les coût de calcul d'adaptation des autres tranches réseaux.

Par « paramètre de configuration » (ou paramètre), on entend une variable participant à la spécification du besoin réseau du service élémentaire à fournir (e.g. à un ensemble de terminaux), et donc fourni par la tranche du réseau. Ainsi, par modification d'un paramètre de configuration, il est entendu une modification d'une valeur d'un paramètre de configuration.

Dans un ou plusieurs modes de réalisation, la modification du au moins un deuxième paramètre de configuration de la au moins une deuxième tranche réseau peut être effectuée dès qu'un premier paramètre de configuration d'une première tranche réseau est modifié.

Ainsi de manière avantageuse, la modification synchronisée d'une ou plusieurs tranche(s) réseau(x) suite à la modification d'au moins un premier paramètre de configuration d'une première tranche réseau peut être effectuée sans délai renforçant ainsi la réduction de latence décrite précédemment.

Dans un ou plusieurs modes de réalisation, le procédé d'adaptation synchronisée peut comprendre en outre :
- une détection d'une modification d'un premier paramètre de configuration d'une première tranche réseau dédié à un premier service élémentaire de l'ensemble de services, la détection déclenchant la modification du au moins un deuxième paramètre de configuration de la au moins une deuxième tranche de réseau.

Ainsi de manière avantageuse, chaque tranche réseau peut adapter ses paramètres de configuration de manière autonome, c'est-à-dire sans recevoir un ordre de modification d'une autre tranche réseau ou d'échange d'informations entre tranches réseaux, puisque chaque tranche réseau associée à un service élémentaire respectif est à même de détecter toute modification de paramètre(s) de configuration de tranche(s) réseau(x).

Selon un ou plusieurs modes de réalisation, la modification peut comporter une identification d'une règle de modification prédéterminée associée à une modification d'un premier paramètre de configuration d'une première tranche réseau apte à être utiliser pour modifier un deuxième paramètre de configuration d'une deuxième tranche réseau.

Par règle de modification prédéterminée (ou règle de modification), il peut être compris la manière dont peut être modifiée un paramètre de configuration, c'est-à-dire une valeur d'un paramètre de configuration, d'une tranche réseau après la modification d'un autre paramètre de configuration, c'est-à-dire une valeur d'un autre paramètre d'une autre tranche réseau.

Notamment, une règle de modification prédéterminée comporte une association d'une modification d'un paramètre de configuration, c'est-à-dire une modification d'une valeur d'un paramètre de configuration, d'une tranche réseau avec une modification d'un autre paramètre de configuration, c'est-à-dire une modification d'une valeur d'un autre paramètre, d'une autre tranche réseau. En particulier, cette association peut être stockée dans une base de règles de modification. Par exemple, cette base de règles de modification peut être propre à chaque tranche réseau ou encore peut être accessible pour toutes les tranches réseaux. Ainsi, lorsqu'une modification d'un paramètre de configuration, c'est-à-dire d'une valeur d'un paramètre de configuration, d'une tranche réseau est effectuée, celle-ci est recherchée dans la base de règles de modification. La règle de modification correspondante dans la base indique alors la modification d'un autre paramètre de configuration, c'est-à-dire soit une nouvelle valeur ou une modification à opérer sur une valeur d'un autre paramètre, d'une autre tranche réseau associée à opérer sur cette autre tranche réseau.

Dans un ou plusieurs modes de réalisation, le procédé peut comporter en outre :
- modifier au moins un troisième paramètre de configuration d'au moins une troisième tranche réseau dédiée à un troisième service élémentaire de l'ensemble de services en fonction d'au moins une modification d'un premier paramètre de premier paramètre de configuration d'une première tranche réseau dédié à un premier service élémentaire de l'ensemble de services.

Ainsi, avantageusement, il est possible d'optimiser d'avantage la propagation de l'adaptation synchronisée de tranches réseaux dédiées à un service.

En outre, dans un ou plusieurs modes de réalisation, la modification peut être effectuée selon au moins une règle de modification prédéterminée qui peut être choisie parmi au moins un ensemble de règles prédéterminées.

Dans un ou plusieurs modes de réalisation, le premier paramètre de configuration peut être choisi parmi une qualité de service (QoS), un niveau de sécurité, un coût de service, un débit, une latence, un nombre d'objets connectés, une activation/désactivation.

Par activation/désactivation, il peut être compris l'activation/désactivation de la tranche réseau ou d'une autre tranche réseau. Dans le cas où la mise en œuvre des tranches réseaux prévoient l'assignation ou l'allocation d'une tranche réseau à un service élémentaire, l'activation/désactivation de la tranche réseau est effectuée sur les tranches réseaux préalablement assignées/allouées. Ainsi, les ressources allouées à une tranche réseau assignée à un service élémentaire resteront en veille tant que la tranche réseau sera désactivée et seront mis en fonction lors de l'activation de la tranche réseau permettant ainsi de réduire les coûts en termes d'utilisation de ressources (notamment les coûts énergétiques) de la tranche réseau.

Selon un ou plusieurs modes de réalisation, la modification peut être effectuée en utilisant au moins une fonction d'adaptation parmi une fonction de type arithmétique, un maximum, un minimum, une présence de conditions, une fonction de type booléen.

La fonction d'adaptation peut correspondre à une modification prédéterminée d'une autre tranche réseau du réseau de télécommunication en fonction d'une modification d'une tranche donnée, en suivant une ou plusieurs règles de modification prédéterminées. Par exemple, une règle de modification peut identifier le deuxième paramètre de l'autre tranche réseau à modifier et la fonction d'adaptation peut être donnée par une autre règle de modification pour définir la manière dont doit être modifié le deuxième paramètre.

L'ensemble des règles de modification et/ou des fonctions d'adaptation entre un ou plusieurs des premiers paramètres de configuration d'une première tranche réseau et un ou plusieurs des deuxièmes paramètres de configuration d'une deuxième tranche réseau constitue un lien, aussi nommé une dépendance, entre la première tranche réseau et la deuxième tranche réseau.

Dans un ou plusieurs modes de réalisation, la modification peut être effectuée en utilisant une fonction d'adaptation unidirectionnelle ou bidirectionnelle.

Par unidirectionnelle, il peut être compris un seul sens d'application d'une fonction d'adaptation, voire d'une règle de modification, entre deux tranches réseaux. Ainsi, un ou plusieurs deuxièmes paramètres de configuration de la deuxième tranche réseau est modifiable en utilisant le procédé d'adaptation synchronisé de la présente description en fonction d'une modification d'un ou plusieurs premiers paramètres de configuration de la première tranche réseau, mais pas l'inverse.

Par bidirectionnelle, il peut être compris deux sens (e.g. réciproque) d'application d'une fonction d'adaptation, voire d'une règle de modification, entre deux tranches réseaux.

En particulier, un deuxième paramètre de configuration modifié d'une deuxième tranche réseau est obtenu en opérant sur un premier paramètre de configuration modifié d'une première tranche réseau une fonction d'adaptation donnée. Et, un premier paramètre de configuration modifié d'une première tranche réseau est obtenu en opérant sur un deuxième paramètre de configuration modifié d'une deuxième tranche réseau la fonction inverse (au sens mathématique) de la fonction d'adaptions donnée.

Dans le cas particulier de l'utilisation d'une base de règles de modification, cela signifie qu'une modification d'un premier paramètre de configuration d'une première tranche réseau entraîne la modification d'un deuxième paramètre de configuration d'une deuxième tranche réseau en fonction de la règle de modification correspondante dans la base de règles de modification et, inversement, une modification d'un deuxième paramètre de configuration d'une deuxième tranche réseau entraîne la modification d'un premier paramètre de configuration d'une première tranche réseau en fonction de la règle de modification correspondante dans la base de règles de modification.

Selon un ou plusieurs modes de réalisation, la fonction d'adaptation bidirectionnelle peut être définie par deux ensembles différents de règles de modifications prédéterminées, ou par un seul ensemble de règles de modifications prédéterminées.

Par exemple, on peut prévoir dans un cas pratique qu'une détermination d'un premier paramètre de configuration à modifier d'une première tranche réseau dédiée à un premier service élémentaire de l'ensemble de services implique des étapes du type:
- estimer au moins une valeur de surcharge de réseau pendant une durée prédéterminée,
- comparer la valeur de surcharge estimée à une valeur seuil ou à une plage de valeur seuil,
- si la valeur de surcharge estimée est supérieure à la valeur seuil ou si la valeur de surcharge est compris dans la plage de valeur seuil, déterminer au moins un premier paramètre de configuration d'une première tranche réseau à modifier.

Typiquement, la valeur de surcharge estimée peut être fonction d'une donnée de réseau choisie parmi :
- un nombre de connexion au réseau ;
- un nombre de demandes de connexion au réseau ;
- une demande de débit sur le réseau.

Par nombre de connexion, il peut être compris un nombre de terminaux connectés simultanément au réseau, ou un nombre d'objets (IOT pour « internet of things ») connectés simultanément au réseau. Il peut être compris aussi tout dispositif connecté simultanément au réseau.

Par nombre de demandes de connexion au réseau, il peut être compris le nombre de requête simultanément émise depuis un ou plusieurs terminaux pour se connecter au réseau.

Par une demande de débit sur le réseau, il peut être compris un débit requis par un ou plusieurs terminaux.

Ainsi, avantageusement, il peut être possible d'adapter un ensemble de tranches réseaux de manière complétement automatisée (i.e. sans aucune intervention manuelle) dès qu'un premier paramètre de configuration d'une première tranche de réseau (c'est-à-dire l'expression de besoin d'un réseau virtuel privé) éventuellement suite à une détection d'un besoin du premier service élémentaire associé à cette première tranche réseau.

Ainsi, une même première tranche réseau associée à un premier service élémentaire d'un ensemble de services peut être liée à plusieurs tranches réseaux (deuxième, troisième, quatrième...tranches réseaux) associées à d'autres services élémentaires (deuxième, troisième, quatrième... services élémentaires) du même ensemble de services.

Ainsi, la mise en œuvre du procédé d'adaptation synchronisée déclenche, lors d'une modification d'un premier paramètre de configuration d'une première tranche réseau, une modification d'un deuxième paramètre de configuration d'une deuxième tranche réseau et, éventuellement, d'un quatrième paramètre de configuration d'une quatrième tranche réseau. Ainsi, les paramètres modifiés ne sont pas forcément associés à des tranches qui se succèdent. En particulier, le premier paramètre de configuration modifié déclenchant la modification du deuxième paramètre de configuration peut être soit le même, soit un premier paramètre de configuration différent de celui déclenchant la modification du quatrième paramètre de configuration.

En outre, dans un exemple, la modification du deuxième paramètre de configuration de la deuxième tranche réseau et/ou la modification du quatrième paramètre de configuration de la quatrième tranche réseau peut déclencher, en mettant en œuvre le procédé d'adaptation synchronisée de la présente description, une modification d'un troisième paramètre de configuration de la troisième tranche réseau.

Eventuellement, lorsque la modification du deuxième paramètre de configuration et la modification du quatrième paramètre de configuration sont déclenchés par deux premiers paramètres de configuration distincts de la première tranche réseau, leurs modifications (la modification du deuxième paramètre de configuration et la modification du quatrième paramètre de configuration) peuvent déclencher la modification de deux troisièmes paramètres de configuration distincts de la troisième tranche réseau.

Un autre aspect de la présente description concerne un dispositif d'adaptation synchronisée de sous-ensemble virtuel d'un réseau de télécommunication dit « tranche du réseau », comportant un circuit de traitement configuré pour la mise en œuvre du procédé.

Selon un autre aspect, il est proposé un programme d'ordinateur comprenant des instructions de code de programme pour l'exécution du procédé.

Un aspect de la présente description concerne aussi un support d'enregistrement non transitoire lisible par un dispositif d'adaptation synchronisée sur lequel les instructions de code d'un programme d'ordinateur selon la présente description sont stockées.

### Brève description des dessins

D'autres caractéristiques, détails et avantages apparaîtront à la lecture de la description détaillée ci-après, et à l'analyse des dessins annexés, sur lesquels :
**Fig. 1**

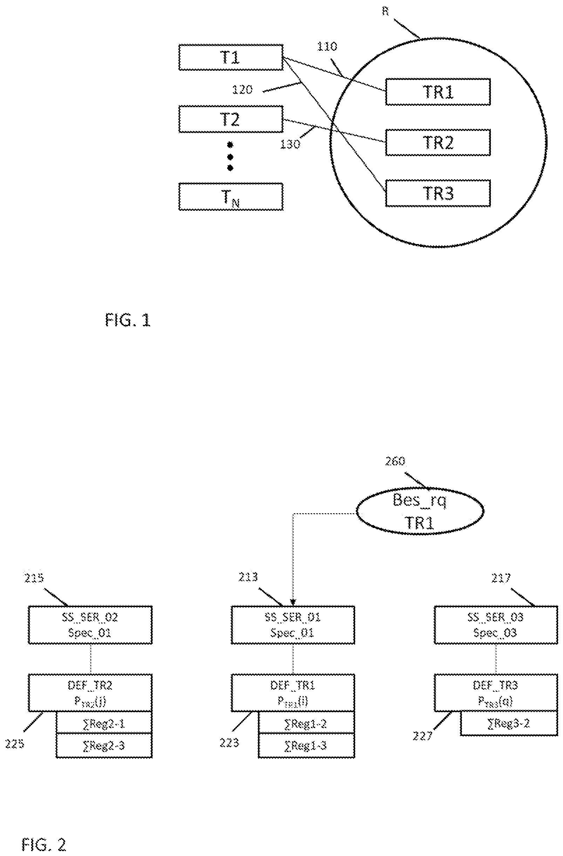

   [Fig. 1] illustre de façon schématique plusieurs terminaux et un équipement d'accès associé un réseau de télécommunication R dans un ou plusieurs modes de réalisation.
**Fig. 2**
   [Fig. 2] illustre de façon schématique la mise en place d'un tel service global (e.g. par un opérateur ou un utilisateur) et un équipement d'accès associé un réseau de télécommunication R selon un premier mode de réalisation.
**Fig. 3**

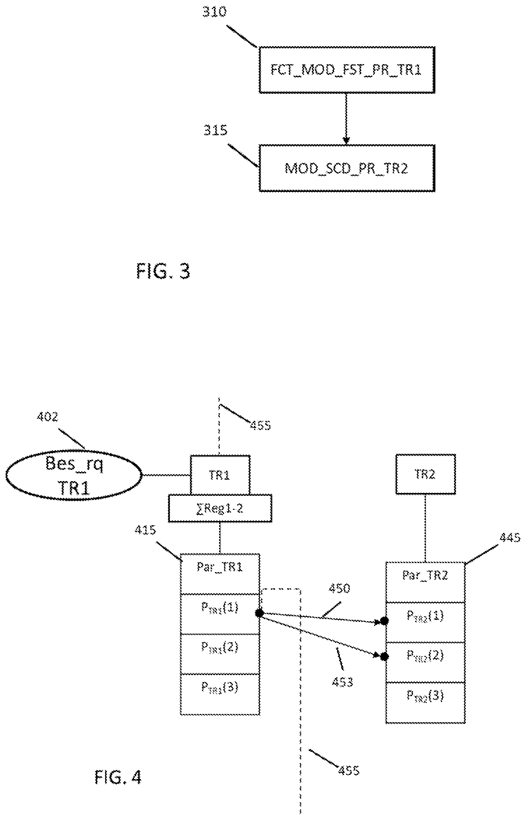

   [Fig. 3] illustre un exemple d'adaptation synchronisée entre deux tranches réseaux dans un ou plusieurs modes de réalisation.
**Fig. 4**
   [Fig. 4] illustre un exemple d'adaptation synchronisée entre deux tranches réseaux dans un ou plusieurs modes de réalisation.
**Fig. 5**

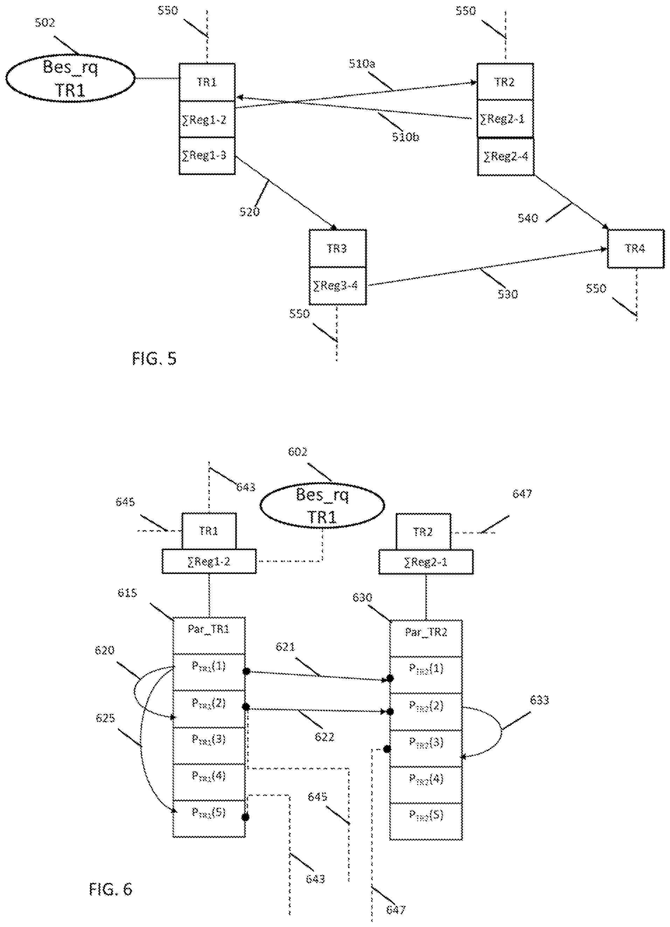

   [Fig. 5] illustre un exemple d'adaptation synchronisée d'un service entre plusieurs tranches réseaux dans un ou plusieurs modes de réalisation.
**Fig. 6**
   [Fig. 6] illustre un autre exemple d'adaptation synchronisée entre deux tranches réseaux dans un ou plusieurs modes de réalisation.
**Fig. 7**

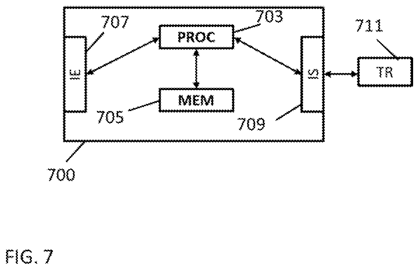

   [Fig. 7] illustre un dispositif d'adaptation synchronisée de sous-ensemble virtuel d'un réseau de télécommunication dans un ou plusieurs modes de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La figure 1 illustre de façon schématique un ou plusieurs terminaux T1 ; T2 ; T_{N} et un équipement d'accès associé un réseau de télécommunication R dans un ou plusieurs modes de réalisation.

Par « terminal », on peut entendre de façon large tout dispositif électronique ou informatique pouvant être connecté au réseau de télécommunication R, par exemple un serveur, un ordinateur, un téléphone portable, ou autre. Le terminal 1 peut lui-même être connecté à d'autres dispositifs électroniques ou informatiques.

Un dispositif de gestion du réseau de télécommunication R peut avantageusement utiliser un virtualisation des fonctions réseaux pour mettre en œuvre une pluralité de tranches sur une infrastructure de réseau physique unique.

Une telle technique de découpage par tranches du réseau peut permettre ainsi au dispositif de gestion du réseau de télécommunication R de proposer des réseaux privés virtuels, indépendants et « sur mesure », capables de fournir des solutions optimisées pour des besoins très variés avec des contraintes très diverses en terme de fonctionnalités et de performance sans réserver à l'avance l'infrastructure de réseau physique. C'est pourquoi les tranches réseaux proposant des réseaux privés virtuels sont définies en fonction d'une expression de besoins réseaux.

Le dispositif de gestion du réseau de télécommunication R peut proposer à terminal 1 ou une pluralité de terminaux T2 ; T_{N} une première tranche du réseau TR1, une deuxième tranche du réseau TR2 et une troisième tranche du réseau TR3 pour accéder à des services différents avec des paramètres réseaux différents. Toutefois, ce mode de réalisation n'est pas limitatif et le dispositif de gestion du réseau de télécommunication R peut proposer un nombre moins élevé, par exemple uniquement deux tranches, ou plus élevé de tranches du réseau.

Une ou plusieurs tranches du réseau TR1, TR2, TR3 peuvent ainsi être utilisées par les terminaux T1, T2, et T_{N}. Les terminaux T1, T2, et T_{N} peuvent être connectés de manière simultanée à toutes les tranches réseaux, ou être connectés de manière partielle, ou être connectés de manière successive à chaque tranche.

Par exemple, par partielle, le terminal T1 peut être connecté 110 à la tranche réseau TR1 et être connecté 120 à la tranche réseau TR3, mais peut ne pas être connecté à la tranche réseau TR2. Le terminal T2 peut être connecté 130, par exemple, uniquement à la tranche TR2.

Chaque tranche du réseau TR1, TR2, TR3 peut être adaptée pour fournir un service élémentaire réseau d'un service global (ou service réseau global) pour un ou plusieurs terminaux.

La figure 2 illustre de façon schématique la mise en place d'un tel service global (e.g. par un Opérateur ou un client Grand Compte) et un équipement d'accès associé un réseau de télécommunication R selon un premier mode de réalisation.

Un service global à fournir, par exemple pour un ensemble de terminaux ou pour des terminaux différents, peut être généralement défini par un ensemble de spécifications ou requis nécessaires au bon fonctionnement de ce service global.

Ainsi, à partir des spécifications, le service peut être mise en œuvre par un ensemble d'un ou plusieurs services élémentaires 213 ; 215 ; 217 comprenant eux-mêmes des spécifications ou requis propres. L'ensemble des services élémentaires 213 ; 215 ; 217 peut permettre de répondre au besoin du service global à fournir.

Pour chaque service élémentaire associé à ses respectives spécifications, une tranche réseau du réseau de télécommunication R peut être paramétrée par un ou plusieurs paramètres, dits « paramètres de configuration ».

Ainsi, avantageusement, un utilisateur (e.g. opérateur, technicien, fournisseur de services, client, etc.) paramétrant un service global à fournir peut utiliser un virtualisation des fonctions réseaux pour mettre en œuvre une pluralité de tranches sur une infrastructure de réseau physique unique (e.g. le réseau de télécommunication R).

Le nombre de services élémentaires utilisés d'un service global n'est pas limitatif. En effet, le nombre de services élémentaires, et donc le nombre de tranches réseaux utilisées dédiées à ces services élémentaires peut être plus élevé ou moins élevé, en fonction des requis ou spécifications du service global à fournir.

Chaque tranche réseau peut être paramétrée par un ou plusieurs paramètres respectifs de configuration. Ces paramètres de configuration peuvent avoir des valeurs initiales pour la mise en place du service global.

Ainsi, les tranches réseaux TR1, TR2, TR3 comportent au moins une, avantageusement plusieurs, paramètres de configurations (ou valeurs de paramètres de configuration) différentes en fonction du service élémentaire respectivement fourni ou à fournir en utilisant la tranche réseau associée.

La tranche réseau TR1 peut être définie 223 par un nombre n de paramètres de configuration P_{TR1}(i), la tranche réseau TR2 peut être définie 225 par un nombre m de paramètres de configuration P_{TR2}(j), et la tranche réseau TR3 peut être définie 227 par un nombre q de paramètres de configuration P_{TR3}(q).

Le nombre de paramètres de configurations pour paramétrer une tranche réseau peut varier en fonction des spécifications ou requis de chaque services élémentaire, eux-mêmes répondant aux spécifications du service global. Par exemple, la tranche réseau TR1 peut comprendre un nombre n=5 de paramètres de configuration P_{TR1}(i), et la tranche réseau TR2 peut comprendre un nombre m=10 de paramètres de configuration P_{TR2}(j).

Dans un ou plusieurs modes de réalisations, un paramètre de configuration peut concerner une fonctionnalité de service de la tranche du réseau correspondant à une exigence de performance du service élémentaire, et donc une exigence de performance de la tranche réseau associée.

En particulier, un paramètre de configuration d'une tranche du réseau peut être choisi parmi le débit, la couverture géographique du service, le nombre de connexion possible, le niveau de sécurité, la latence, ou encore la qualité de service (« quality of service » en anglais).

De plus, dans un ou plusieurs modes de réalisations, un paramètre de configuration peut concerner une exigence fonctionnelle d'un service élémentaire (et donc de la tranche réseau associée à ce service élémentaire). Ainsi, un paramètre de configuration correspondant à des exigences fonctionnelles d'une tranche du réseau peut être choisi parmi divers exigences relatives au service élémentaire à fournir, telles que le coût du service pour l'utilisateur, ou encore l'aspect consommation énergétique.

En plus, des paramètres de configurations paramétrant chaque tranche réseau d'un service élémentaire, une ou plusieurs règles de modifications prédéterminées peuvent être définies afin d'établir des dépendances (ou liens) entre les différentes tranches réseaux du réseau de télécommunication (R). Ainsi une ou plusieurs règles de modifications peuvent être attachées à une tranche réseau.

Par exemple, l'ensemble ∑Reg1-2 peut correspondre à l'ensemble des règles de modification (par exemple sous la forme de fonctions d'adaptation) applicables sur la deuxième tranche 225 lorsque la première tranche 223 est modifiée (i.e. une valeur de paramètre de configuration de la première tranche réseau est modifiée). L'ensemble ∑Reg2-1 peut correspondre à l'ensemble des règles de modification applicables sur la première tranche 223 lorsque la deuxième tranche 225 est modifiée. L'ensemble ∑Reg2-1 peut correspondre, par exemple, à des règles de modifications sous la forme de fonctions d'adaptation inverses (au sens mathématique) des fonctions d'adaptations de l'ensemble ∑Reg1-2, ou peut correspondre selon une alternative possible à des règles de modification différentes (et/ou fonctions d'adaptation différentes). Ainsi, les règles de modifications (et/ou fonctions d'adaptation) entre deux tranches réseaux peuvent être bidirectionnelles.

En outre, la première tranche réseau peut être paramétrée avec aussi l'ensemble ∑Reg1-3 correspondant à l'ensemble des règles de modifications applicables sur la troisième tranche 227 lorsque la première tranche 223 est modifiée.

Selon un autre exemple, seulement un ensemble ∑Reg1-3 de règles de modification peut être défini entre la première tranche de réseau 223 et la troisième tranche de réseau 227. Dans cet exemple, une modification de paramètres de configuration de la troisième tranche de réseau 227 n'entraine pas de modification de paramètres de configuration de la première tranche réseau 223. Ainsi, les règles de modifications (et/ou les fonctions d'adaptation) entre deux tranches réseaux peuvent être unidirectionnelles. Dans ce cas, la troisième tranche réseau peut être dite « esclave », et la première tranche réseau dite « maitre ».

En référence à la figure 2, lorsqu'une valeur modifiée d'un paramètre de configuration de la première tranche 223 est détectée, une règle de modification prédéterminée de l'ensemble ∑Reg1-2 peut être identifiée et utilisée pour modifier la valeur d'un second paramètre de configuration de la deuxième tranche réseau 225.

La modification d'un paramètre de configuration d'une tranche réseau peut faire suite à un besoin 260, prédéfini ou non (par exemple un nouveau besoin ou un besoin imprévu).

Par exemple, la réponse à ce besoin 260 peut être une augmentation de débit, une diminution de latence, ou une nouvelle qualité de service pour une tranche de réseau spécifique. Ainsi, la réponse va être réalisée en modifiant le paramétrage de cette tranche de réseau, ici la tranche réseau 223. Il est entendu que la modification du paramétrage de la tranche réseau 225 peut par exemple répondre à ce besoin si cela s'avère plus optimal.

L'utilisation d'une ou plusieurs règles de modification prédéterminées respectivement attachées à chaque tranche réseau d'un service global permet d'adapter ensuite l'ensemble des tranches réseaux de chaque service élémentaire lié de manière simple et efficace.

Ainsi, avantageusement, le paramétrage d'une deuxième tranche réseau peut être modifié sans nécessiter une intervention manuelle (e.g. par un opérateur, technicien, utilisateur, etc.) via l'expression d'un nouveau besoin 260.

La figure 3 illustre un exemple de procédé pour l'adaptation synchronisée d'une ou plusieurs tranches réseaux dans un ou plusieurs modes de réalisation.

Ainsi, sur avènement d'un besoin service prédéfini ou non, il peut être nécessaire de modifier le paramétrage d'une tranche réseaux.

Le besoin prédéfini (ou programmé) peut être, par exemple, une certaine configuration d'une ou plusieurs tranches réseaux d'un service global en fonction d'une plage horaire prédéfinie, ou d'une heure prédéfinie. La programmation selon une plage horaire prédéfinie ou d'une heure prédéfinie peut être directement implantée lors du paramétrage initial des tranches réseaux, ou commandée à distance (e.g. par le biais d'un serveur).

Par exemple, lorsque la plage horaire est détectée, un ou plusieurs paramètres de configuration d'une ou plusieurs tranches réseau associée(s) à un ou plusieurs services élémentaires d'un service global peuvent être modifiés, et leur modification peut entrainer l'adaptation synchronisée des autres tranches réseaux associées à d'autres services élémentaires du même service global par l'intermédiaire d'une ou plusieurs règles de modification prédéterminées.

Le besoin non prédéfini, ou nouveau besoin, ou besoin imprévu, peut être un besoin provenant de la modification de l'environnement extérieur (e.g. augmentation du nombre de terminaux, besoin d'une latence plus faible, ou d'une meilleure qualité de service).

La modification 310 d'un premier paramètre de configuration peut correspondre à une valeur du premier paramètre de configuration transmise, détectée, ou entrée par un utilisateur (e.g. opérateur, utilisateur du service globale, etc.) par exemple. Cette modification peut faire suite par exemple à une surcharge de réseau pendant une durée prédéterminée (en conséquence d'un nouveau besoin par exemple) comme expliqué précédemment.

A partir de cet premier paramètre de configuration modifié 310 et/ou de la modification du premier paramètre de configuration, c'est-à-dire, par exemple, d'une fonction de modification appliquée au premier paramètre de configuration pour le modifier ou d'une valeur de modification (la valeur de modification pouvant être entière, décimale ou réelle, positive ou négative, etc.) ajoutée ou multipliée à la valeur initiale du premier paramètre de configuration, il peut être possible de déterminer le deuxième paramètre de configuration à modifier de la deuxième tranche réseau et d'identifier 315 une modification à appliquer au deuxième paramètre de configuration de la deuxième tranche réseau en fonction du premier paramètre de configuration de la première tranche réseau (et notamment de la modification effectuée sur ce première paramètre de configuration de la première tranche réseau). La modification à appliquer au deuxième paramètre de configuration de la deuxième tranche réseau est, en particulier, une fonction d'adaptation prédéterminée du deuxième paramètre de configuration de la deuxième tranche réseau en fonction du premier paramètre de configuration de la première tranche, ou au moins une règle de modification prédéterminée entre le premier paramètre de configuration, et au moins un deuxième paramètre de configuration. La règle de modification prédéterminée peut correspondre à une dépendance (ou un lien) entre la première tranche réseau et la deuxième tranche réseau, par exemple sous la forme d'une fonction d'adaptation d'un deuxième paramètre de configuration d'une deuxième tranche réseau en fonction d'un premier paramètre d'un premier paramètre de configuration d'une première tranche réseau, permettant de déterminer à la fois le deuxième paramètre de configuration de la deuxième tranche réseau concerné par la modification et la valeur modifiée de ce deuxième paramètre de configuration.

Par exemple, si le premier paramètre de configuration correspond à un paramètre de débit de la première tranche, le second paramètre de configuration peut correspondre à un paramètre de débit d'une deuxième tranche réseau. Et, dans ce cas, la modification de la demande de débit de la première tranche réseau entraîne en appliquant le procédé d'adaptation synchronisée une modification du débit de la deuxième tranche réseau. Par exemple, le lien entre les deux tranches réseaux correspondant à une fonction d'adaptation dans laquelle le débit de la deuxième tranche réseau est un multiple (par exemple deux fois) du débit de la première tranche réseau. Ainsi, si la demande/l'exigence de débit pour la première tranche réseau augmente, alors l'exigence de débit pour la deuxième tranche réseau est ajustée en conséquence et augmente deux fois plus vite dans cet exemple.

Selon un autre exemple, le deuxième paramètre de réseau peut être de nature différente par rapport au premier paramètre de réseau. Si le premier paramètre de configuration correspond à un paramètre de débit de la première tranche, le second paramètre de configuration peut correspondre à un paramètre de latence ou de nombre d'objets connectés de la deuxième tranche réseau.

La règle de modification prédéterminée peut permettre de définir la manière dont doit être modifiée un paramètre de configuration d'une tranche réseau à partir d'un paramètre de configuration modifié d'une autre tranche réseau. La règle de modification prédéterminée peut comprendre par exemple au moins une fonction arithmétique, ou une fonction booléenne, ou une combinaison des deux.

Après identification de la règle de modification prédéterminée à utiliser entre le premier paramètre de configuration et le deuxième de paramètre de configuration, il peut être possible de modifier 315 le deuxième paramètre de configuration de la deuxième tranche réseau en fonction de la première règle prédéterminée et, éventuellement, de la valeur initiale du deuxième paramètre de configuration.

La figure 4 illustre un exemple d'adaptation synchronisée entre deux tranches réseaux dans un ou plusieurs modes de réalisation.

Deux tranches réseaux TR1 et TR2 associées à un service élémentaire respectif peuvent être définies par un ou plusieurs paramètres de configuration respectifs 415 ; 445 (ou définies respectivement par un ensemble de paramètres de configuration).

En outre, le paramétrage des services élémentaires (et donc des tranches réseaux) peut comprendre une ou plusieurs règles de modification prédéterminées définissant les différents liens existants entre les tranches réseaux.

Par exemple, l'ensemble ∑Reg1-2 peut correspondre à l'ensemble des règles de modification applicables sur la deuxième tranche TR2 (e.g. sur la valeur d'un deuxième paramètre de la deuxième tranche réseau TR2) lorsque la première tranche TR1 est modifiée, par exemple lorsque qu'une valeur d'un premier paramètre de configuration de la première tranche réseau est modifiée. Ces règles de modification peuvent par exemple sous la forme de fonctions d'adaptations.

En référence à la figure 4, les paramètres de configuration (P_{TR}) de la première tranche réseau et de la deuxième tranche réseau peuvent être, par exemple, un débit (P_{TR1}(1) et P_{TR2}(1)), une latence (P_{TR1}(2) et P_{TR2}(2)), et un nombre d'objets connectés permis (P_{TR1}(3) et P_{TR2}(3)). Pour chaque paramètre de configuration, une valeur peut, par exemple, y être associée.

Ainsi, pour répondre à un besoin identifié 402 sur une première tranche de réseau (e.g. programmé/prédéfini ou non), il peut être nécessaire pour des raisons de cohérence notamment de modifier la configuration du service global, et donc de modifier le paramétrage d'autres tranches réseaux associées à d'autres services élémentaires mettant en œuvre le service global. Par exemple, la valeur de débit d'un premier paramètre P_{TR1}(1) de configuration de la tranche de réseau TR1 peut être augmentée en passant d'une valeur de 1 Mbit/sec à une valeur de 2 Mbits/seconde.

Si la règle de modification prédéterminée de l'ensemble ∑Reg1-2 liant le paramètre de configuration P_{TR1}(1) et le paramètre de configuration P_{TR2}(1) est une fonction d'adaptation de type arithmétique, par exemple une multiplication par un facteur T=2, alors au moment de la modification de la valeur P_{TR1}(1), la valeur P_{TR2}(1) peut être multipliée 450 par ce facteur T, soit 4 Mbits/seconde.

Si la règle de modification prédéterminée précédente comprend en outre une valeur de débit maximum pour la tranche de réseau TR2 à ne pas dépasser, par exemple 3 Mbits/seconde, alors au moment de la modification de la valeur P_{TR1}(1), la valeur P_{TR2}(1) multipliée par le facteur T peut être mise à 3 Mbits/seconde au lieu de 4 Mbits/seconde.

Selon un autre exemple, la modification du paramètre de configuration P_{TR1}(1), peut aussi entrainer 455 la modification d'un ou plusieurs paramètres de configuration d'une autre tranche réseau selon une ou plusieurs règles de modification appartenant à différents ensembles de règles de modifications (non représenté sur la figure 4).

Selon un autre exemple, la règle de modification prédéterminée peut être sous la forme d'une fonction d'adaptation comportant une ou plusieurs conditions. Par exemple, si suite au besoin, la modification de la valeur du paramètre de débit P_{TR1}(1) est supérieure ou inférieure à une certaine valeur, alors le ou les paramètres de configuration de la tranche réseau TR2 peuvent être modifiés 450 ; 453 suivant des valeurs différentes en fonction des conditions d'entrée (e.g. valeur supérieure ou inférieure).

Par exemple, si Modification(P_{TR1}(1)) > 5 Mbits/sec, alors P_{TR2}(1) = 4 Mbits/sec sinon P_{TR2}(1) = 2 Mbits/sec.

Selon un autre exemple, si Modification(P_{TR1}(1))> 5 Mbits/sec, alors P_{TR2}(1) = 4 Mbits/sec sinon P_{TR2}(2) (i.e. latence) = 10 millisecondes.

Selon une alternative, il peut être aussi possible de définir un ensemble ∑Reg2-1 de règles de modification applicables (non représenté sur la figure 4) sur la tranche de réseau TR1 lorsque la tranche de réseau TR2 est modifiée (e.g. une valeur d'un premier paramètre de la deuxième tranche de réseau TR2). L'ensemble ∑Reg2-1 peut comprendre des règles de modification, par exemple sous la forme de fonctions d'adaptation, correspondant à l'inverse des fonctions d'adaptation de l'ensemble ∑Reg1-2, ou comprendre des règles de modification différentes, ou encore des fonctions d'adaptation différentes. Par exemple, les règles de modifications de l'ensemble ∑Reg1-2 peuvent porter sur le débit et la latence, et les règles de modification de l'ensemble ∑Reg2-1 peuvent porter sur le débit, la sécurité, et le coût.

Ainsi, il est possible de définir des règles de modifications prédéterminées différentes lorsque les modifications du paramétrage interviennent à la tranche de réseau TR1 ou à la tranche de réseau TR2.

La figure 5 illustre un exemple d'adaptation synchronisée d'un service entre plusieurs tranches réseaux dans un ou plusieurs modes de réalisation.

Ainsi, quatre tranches réseaux TR1, TR2, TR3, TR4 (associées à un service élémentaire respectif) peuvent être paramétrées par un ou plusieurs paramètres de configurations (ou ensembles d'un ou plusieurs paramètres de configuration) pour chaque tranche réseau comme décrit précédemment.

L'ensemble des tranches réseaux permettent la mise en œuvre d'un service global.

En outre, le paramétrage des services élémentaire (et donc des tranches réseaux) peut comprendre une ou plusieurs règles de modification prédéterminées définissant les liens (ou interactions) entre les différentes tranches réseaux. Des ensembles respectifs de règles de modification peuvent ainsi être attachés à chaque tranche réseau du service global.

Par exemple, l'ensemble ∑Reg1-2 peut correspondre à l'ensemble des règles de modification applicables 510a sur la deuxième tranche de réseau TR2 lorsque la première tranche de réseau TR1 est modifiée. L'ensemble ∑Reg2-1 peut correspondre à l'ensemble des règles de modification applicables 510b sur la première tranche de réseau TR1 lorsque la deuxième tranche de réseau TR2 est modifiée. L'ensemble ∑Reg1-3 peut correspondre à l'ensemble des règles de modification applicables 520 sur la troisième tranche de réseau TR3 lorsque la première tranche de réseau TR1 est modifiée, etc.

De plus, chaque tranche réseau peut aussi interagir 550 avec une ou plusieurs autres tranches réseaux par l'intermédiaire de différents ensembles de règles de modifications (non représenté sur la figure 5).

Ainsi, il est possible d'adapter de manière synchronisée un ensemble de tranches réseaux en réalisant une ou plusieurs modifications de paramètres de configuration sur un nombre restreint de tranches réseaux compris dans un ensemble de tranches réseaux.

En ne modifiant qu'un nombre restreint de tranches réseaux, les paramètres de configuration des autres tranches réseaux peuvent être modifiés grâce à un effet cascade (ou avalanche).

Par exemple, suite à un besoin (e.g. prédéfini ou non) 502, une modification d'un paramètre de configuration de la tranche réseau TR1 peut permettre, grâce aux règles de modification à TR1), de modifier les tranches réseaux TR3 et TR2.

Les paramètres de configuration des tranches réseaux TR2 et TR3 peuvent ainsi être modifiés automatiquement en suivant les règles prédéterminées et sans intervention manuelle. Ces mêmes tranches réseaux TR2 et TR3 vont elles-mêmes, grâce aux ensembles de règles de modifications permettre de modifier 530 ; 540 la tranche réseau TR4.

Ainsi, à partir de la modification de paramètres de configuration d'une seul tranche réseau (TR1), il peut être possible de modifier automatiquement 3 autres tranches réseaux (TR2 ; TR3 ; TR4), ainsi qu'une pluralité de tranches réseaux pouvant interagir par les liens 550 (unidirectionnels ou bidirectionnels).

La figure 6 illustre un autre exemple d'adaptation synchronisée entre deux tranches réseaux dans un ou plusieurs modes de réalisation.

Deux tranches de réseau TR1 et TR2 associées à un service élémentaire respectif peuvent être définies par un ou plusieurs paramètres de configuration respectifs 615 ; 630 (ou définies respectivement par un ensemble de paramètres de configuration).

En outre, un ensemble de règles de modification respectif peut être attaché à chaque tranche réseau comme décrit précédemment dans la figure 4 et la figure 5.

La tranche réseau TR1 peut comprendre, en plus, des interactions 643 ; 645 (unidirectionnelles ou bidirectionnelles) avec d'autres tranches réseaux que la tranche réseau TR2. De même, la tranche TR2 peut comprendre, en plus, une interaction 647 avec une autre tranche réseau que la tranche réseau TR1. Ces interactions peuvent être mises en œuvre par l'intermédiaire d'une ou plusieurs règles de modifications respectives, ou de différents ensembles respectifs de règles de modifications attachées à chaque tranche réseau (non représenté sur la figure 6).

Les paramètres de configurations (P_{TR}) de la première tranche réseau et de la deuxième tranche réseau peuvent être, par exemple, un débit P_{TR1}(1) ; P_{TR2}(1), une latence P_{TR1}(2) ; P_{TR2}(2), un nombre d'objets connectés permis P_{TR1}(3) ; P_{TR2}(3), un degré (ou niveau) de sécurité P_{TR1}(4) ; P_{TR2}(4) ou encore un coût P_{TR1}(5) ; P_{TR2}(5). Pour chaque paramètre de configuration, une valeur peut, par exemple, y être associée.

Comme décrit précédemment, en fonction des règles de modifications respectives (ou ensembles de règles de modifications respectifs) attachées à chaque tranche réseau, une modification d'un paramètre de configuration de la tranche de réseau TR1 peut entrainer la modification d'un paramètre de configuration de la tranche de réseau TR2. Par exemple, suite à un besoin 602, la modification du paramètre de configuration P_{TR1}(1) de la tranche TR1 peut entrainer 621 la modification du paramètre de configuration P_{TR2}(1) de la tranche de réseau TR2.

Cette même modification d'un paramètre de configuration de la tranche TR1 peut aussi entrainer déjà une modification d'un ou plusieurs paramètres de configuration de la même tranche réseau TR1 créant ainsi une interdépendance entre les paramètres de configuration.

Par exemple, une modification de la valeur de débit du paramètre de configuration P_{TR1}(1) peut entrainer 620 mécaniquement une modification de la valeur du paramètre de latence P_{TR1}(2) de la tranche réseau TR1.

De même, l'augmentation de la valeur de débit du paramètre de configuration P_{TR1}(1) peut aussi entrainer mécaniquement 625 une modification du paramètre P_{TR1}(5) lié au coût de la tranche réseau TR1. En effet, une augmentation de débit d'une tranche réseau peut être accompagnée d'une augmentation de coût de cette tranche réseau.

En fonction des règles de modifications définies entre la tranche réseau TR1, et une ou plusieurs tranches réseaux, les paramètres de configuration modifiés P_{TR1}(2) et P_{TR1}(5) résultants de la modification du paramètre P_{TR1}(1) peuvent eux même entrainer 622 la modification de paramètres de configuration d'autres tranches réseaux via les différentes interactions (ou liens) 643 et 645.

En outre, les paramètres de configuration de la tranche réseau TR2 peuvent eux même comprendre des interdépendances. Par exemple, la modification du paramètre de configuration P_{TR2}(2) peut entrainer la modification du paramètre de configuration P_{TR2}(3), lui-même entrainant la modification d'un paramètre de configuration d'une autre tranche réseau 647.

Selon un exemple, l'augmentation du débit P_{TR1}(1) de la tranche réseau TR1 peut entrainer une baisse de la latence P_{TR1}(2) de la tranche réseau TR1. Cette baisse de latence peut entrainer l'application d'une règle de modification au paramètre de latence P_{TR2}(2) correspondant par exemple à une valeur maximum de latence à ne pas dépasser. Cette valeur maximum à ne pas dépasser peut entrainer 633 une modification du paramètre P_{TR2}(3) correspondant au nombre d'objet connecté permis, par exemple, ce nombre peut être réduit.

Exemple de mise en situation d'une adaptation synchronisée de tranches réseaux.

Un hôpital peut gérer au travers de tranches réseaux (TR1, TR2, TR3, TR4) ses différents besoins réseaux (e.g. communication) pour différents services : les médecins en déplacements, les interventions à distance, le matériel médical connecté, etc.

Dans la nuit, un incident vient juste de se produire (e.g. incendie, accident de voitures, etc.). De nombreux blessés sont à déplorer et une certaine panique tend à se propager.

Le gestionnaire de réseaux de l'hôpital réagit aussitôt en réévaluant le paramétrage de la tranche réseau (TR1) associée à la communication du personnel des urgences.

Grâce aux règles de modification prédéterminées (ou ensemble de règles de modification prédéterminées) entre tranches réseaux, d'autres tranches réseaux (TR2 et TR3) peuvent alors être adaptées en suivant les règles prédéterminées pour anticiper les opérations à venir en grand nombre (e.g. éventuellement à distance), ainsi que de maintenir une qualité de communication sans faille (e.g. dans le but de maintenir des communications avec un grand nombre de médecins).

Sans cette adaptation synchronisée, l'organisation dans l'urgence peut prendre un temps bien plus long, et la modification manuelle de chaque tranche réseau (TR1, TR2, TR3, TR4) pour répondre à ce besoin non prédéfini ou imprévu et urgent peut engendrer un certain nombre d'erreur (e.g. erreur humaine) dans le paramétrage des tranches réseaux.

Selon un autre exemple de mise en situation d'une adaptation synchronisée de tranches réseaux.

Dans l'organisation de son festival au milieu des champs, un utilisateur (e.g. organisateur) peut avoir prévu plusieurs tranches réseaux (TR1, TR2, TR3, TR4) de caractéristiques différentes pour des besoins différents comprenant deux nouveautés pour cette année :
- une tranche réseau TR2 pour l'option « très haut débit » visant les smartphones compatibles des utilisateurs (e.g. festivaliers)
- une tranche réseau TR3 pour toutes les opérations de paiement sur le festival, et en particulier pour l'achat de l'option « très haut débit ».

Aujourd'hui le festival bat son plein et les festivaliers sont bien plus nombreux que prévus.

Alertée de la venue non prévue d'une personne très connue et du succès de l'option « très haut débit », l'utilisateur organisant le festival décide d'adapter les paramètres de la tranche réseau TR2 pour répondre à la demande.

Comme l'utilisateur organisant le festival a prévu des liens entre les tranches réseau TR2 et TR3, et qui sont associées à un ou plusieurs ensembles de règles de modification prédéterminées, les paramètres de configuration de la tranche réseau TR3 peuvent être modifiés afin d'assurer correctement toutes les opérations de paiements.

Alternativement, pour répondre aux besoins décrits dans les précédentes mises en situation, il peut être possible de déterminer le ou les paramètres de configurations à modifier, et sous quelles conditions.

Par exemple, dans le cas de la deuxième situation, une valeur de surcharge de réseau (e.g. suite au besoin imprévu) peut être estimée en fonction d'un nombre de connexion simultanée au réseau ou selon un nombre de demande de connexion au réseau, ou encore selon une demande de débit par l'ensemble des festivaliers.

Cette valeur de surcharge peut être comparée à une valeur seuil ou selon une plage de valeur seuil. Par exemple, si la valeur de surcharge estimée est dans une certaine plage de valeur, un ou plusieurs premiers paramètres de configuration d'une première tranche réseau peuvent être déterminés ainsi qu'une modification de chaque paramètre identifié pour répondre à cette surcharge.

L'ensemble du processus est entièrement automatisé, et l'organisateur du festival peut être délesté de la gestion du réseau pour son festival.

La figure 7 illustre un dispositif d'adaptation synchronisée de tranches de réseaux ou slices d'un réseau de télécommunication dans un ou plusieurs modes de réalisation.

Le dispositif d'adaptation comporte un modificateur d'au moins un deuxième paramètre de configuration d'au moins une deuxième tranche dédiée à un deuxième service élémentaire d'un ensemble de services en fonction d'au moins une modification d'un premier paramètre de configuration d'une première tranche dédiée à un premier service élémentaire de l'ensemble de services. La figure 7 illustre le cas d'un modificateur implémenté dans un circuit de traitement 703 exécutant un programme mettant en œuvre une modification de deuxième paramètre de configuration.

Ainsi, le dispositif d'adaptation synchronisée peut comprendre une mémoire 705 pour stocker des instructions d'un programme.

La mémoire 705 peut en outre stocker des données et des informations utiles pour mettre en œuvre le procédé de la présente description. Par exemple, la mémoire 705 peut stocker une ou plusieurs règles de modifications (ou des ensembles de règles de modification) attachées à chaque tranche réseau du service global, par exemple sous la forme d'une base de codes d'instructions.

Le programme peut être exécuté par un circuit de traitement 703 configuré pour la mise en œuvre du procédé de la présente description.

Le circuit de traitement 703 peut être par exemple :
- un processeur ou unité de traitement adapté pour interpréter des instructions en langage informatique, le processeur ou l'unité de traitement peut comprendre, ou peut être associé à une mémoire comprenant des instructions, ou
- l'association d'un processeur / unité de traitement et d'une mémoire, le processeur ou l'unité de traitement pouvant être adapté pour interpréter des instructions en langage informatique, la mémoire comprenant lesdites instructions, ou,
- une puce électronique programmable telle qu'une puce FPGA (pour «Field Arrayable Gate Array»).

Le dispositif d'adaptation synchronisée 700 peut comprendre en outre une interface d'entrée 707 pour acquérir une ou plusieurs données de modification de paramètres de configuration de tranches réseaux.

Le dispositif d'adaptation synchronisée 700 peut comprendre en outre une interface de sortie 709 pour modifier des paramètres de configurations de tranches réseaux 711 pour acquérir une ou plusieurs données de modification de paramètres de configuration de tranches réseaux d'un réseau de télécommunication.

Le procédé de la présente description permet une adaptation automatique et rapide des tranches réseau associées à des services élémentaires d'un même ensemble de services. Dans le cas où l'adaptation utilise des fonctions d'adaptation ou des règles de modification prédéfinies, cela permet de gagner encore en réactivité et de réduire les erreurs.

Par ensemble de services est entendu un service global comportant plusieurs services élémentaires, ou des services élémentaires d'un même client ou fournisseur de services, ou des services élémentaires d'un même type.

La présente description n'est pas limitée aux exemples de réalisation ci-dessus décrits et représentés aux paragraphes [0139] à [0153], à partir desquels on pourra prévoir d'autres modes et d'autres formes de réalisation (typiquement, en variant la situation d'application des tranches réseau, le nombre et/ou le type de tranches de réseau, de services élémentaires, de besoins ou encore de paramètres de configuration par exemple), sans pour autant sortir du cadre de la présente description. Néanmoins, uniquement les modes et formes de réalisation qui tombent sous le cadre des revendications sont couvertes par le cadre de protection de l'invention.

## Revendications

1. Procédé d'adaptation synchronisée d'un sous-ensemble virtuel d'un réseau de télécommunication (R) dit « tranche du réseau », dédié à un service élémentaire d'un ensemble de services, un service global étant constitué par plusieurs services élémentaires auxquels des tranches respectives distinctes sont dédiées, le réseau de télécommunication (R) comprenant une pluralité de tranches du réseau (TR1, TR2, TR3), lesdites tranches (TR1, TR2, TR3) étant paramétrées selon une pluralité de paramètres de configuration (P_{TR1}(i), P_{TR2}(j), P_{TR3}(q)), le procédé comprenant au moins:
- modifier (315) au moins un deuxième paramètre de configuration d'au moins une deuxième tranche (TR2), ladite deuxième tranche (TR2) étant dédiée à un deuxième service élémentaire d'un ensemble de services, en fonction d'au moins une modification (310) d'un premier paramètre de configuration d'une première tranche (TR1) dédiée à un premier service élémentaire de l'ensemble de services.

2. Procédé selon la revendication 1 dans lequel la modification (315) du au moins un deuxième paramètre de configuration de la au moins une deuxième tranche réseau (TR2) est effectuée dès qu'un premier paramètre de configuration d'une première tranche réseau (TR1) est modifié.

3. Procédé selon l'une quelconque des revendications précédentes dans lequel le procédé d'adaptation synchronisé comprend en outre :
- une détection d'une modification (310) d'un premier paramètre de configuration d'une première tranche réseau (TR1) dédié à un premier service élémentaire de l'ensemble de services, la détection déclenchant la modification (315) du au moins un deuxième paramètre de configuration de la au moins une deuxième tranche de réseau (TR2).

4. Procédé selon l'une quelconque des revendications précédentes dans lequel la modification (315) comporte une identification d'une règle de modification prédéterminée associée à une modification (310) d'un premier paramètre de configuration d'une première tranche réseau (TR1) apte à être utilisée pour modifier un deuxième paramètre de configuration d'une deuxième tranche réseau (TR2).

5. Procédé selon l'une quelconque des revendications précédentes, dans lequel le procédé comporte en outre :
- modifier au moins un troisième paramètre de configuration d'au moins une troisième tranche réseau (TR3), ladite troisième tranche réseau (TR3) étant dédiée à un troisième service élémentaire de l'ensemble de services, en fonction d'au moins une modification d'un premier paramètre de configuration d'une première tranche réseau (TR1) dédié à un premier service élémentaire de l'ensemble de services.

6. Procédé selon l'une quelconque des revendications précédentes dans lequel le premier paramètre de configuration est choisi parmi une qualité de service (QoS), un niveau de sécurité, un coût de service, un débit, une latence, un nombre d'objets connectés, une activation/désactivation.

7. Procédé selon l'une quelconque des revendications précédentes dans lequel la modification est effectuée en utilisant au moins une fonction d'adaptation parmi une fonction de type arithmétique, un maximum, un minimum, une présence de conditions, une fonction de type booléen.

8. Procédé selon l'une quelconque des revendications précédentes, dans lequel la modification est effectuée en utilisant une fonction d'adaptation unidirectionnelle ou bidirectionnelle.

9. Procédé selon la revendication 8, dans lequel la fonction d'adaptation bidirectionnelle est définie par deux ensembles différents de règles de modifications prédéterminées, ou par un seul ensemble de règles de modifications prédéterminées.

10. Dispositif (700) d'adaptation synchronisée d'un sous-ensemble virtuel d'un réseau de télécommunication (R) dit « tranche du réseau », dédié à un service élémentaire d'un ensemble de services, un service global étant constitué par plusieurs services élémentaires auxquels des tranches respectives distinctes sont dédiées, le réseau de télécommunication (R) comprenant une pluralité de tranches du réseau (TR1, TR2, TR3), lesdites tranches (TR1, TR2, TR3) étant paramétrées selon une pluralité de paramètres de configuration (P_{TR1}(i), P_{TR2}(j), P_{TR3}(q)), le dispositif (700) d'adaptation comportant un modificateur d'au moins un deuxième paramètre de configuration d'au moins une deuxième tranche (TR2), ladite deuxième tranche (TR2) étant dédiée à un deuxième service élémentaire d'un ensemble de services, en fonction d'au moins une modification (310) d'un premier paramètre de configuration d'une première tranche (TR1) dédiée à un premier service élémentaire de l'ensemble de services.

11. Dispositif (700) selon la revendication 10, le dispositif (700) d'adaptation comportant en outre une interface d'entrée (707) pour acquérir une ou plusieurs données de modification de paramètres de configuration de tranches réseaux.

12. Dispositif (700) selon l'une quelconque des revendications 10 ou 11, le dispositif (700) d'adaptation comportant en outre une interface de sortie (709) pour modifier des paramètres de configurations de tranches réseaux pour acquérir une ou plusieurs données de modification de paramètres de configuration de tranches réseaux d'un réseau de télécommunication (R).

13. Dispositif (700) selon l'une quelconque des revendications 10 à 12, le dispositif (700) d'adaptation comportant un circuit de traitement (703) configuré pour la mise en œuvre des étapes du procédé selon l'une des revendications 1 à 9 implémentant le modificateur.

14. Programme d'ordinateur comprenant des instructions de code de programme dont l'exécution par un circuit de traitement d'un dispositif d'adaptation configure ledit dispositif à mettre en œuvre les étapes du procédé selon l'une quelconque des revendications 1 à 9.

15. Support d'enregistrement non transitoire lisible par un dispositif d'adaptation synchronisée sur lequel des instructions de code d'un programme d'ordinateur, sont stockées, lesdites instructions de code, lorsqu'elles sont exécutées par un circuit de traitement du dispositif d'adaptation synchronisée, configurant le dispositif d'adaptation synchronisée à mettre en œuvre les étapes du procédé selon l'une quelconque des revendications 1 à 9.

## Patentansprüche

1. Verfahren zur synchronisierten Anpassung einer virtuellen Untereinheit eines Telekommunikationsnetzwerks (R), "Netzwerkscheibe" genannt, die einem elementaren Dienst einer Gruppe von Diensten zugeordnet ist, wobei ein globaler Dienst aus mehreren elementaren Diensten besteht, denen unterschiedliche Scheiben zugeordnet sind, wobei das Telekommunikationsnetzwerk (R) eine Vielzahl von Scheiben des Netzwerks (TR1, TR2, TR3) enthält, wobei die Scheiben (TR1, TR2, TR3) gemäß einer Vielzahl von Konfigurationsparametern (P_{TR1}(i), P_{TR2}(j), (P_{TR3}(q)) parametriert sind, wobei das Verfahren mindestens enthält:
- Ändern (315) mindestens eines zweiten Konfigurationsparameters mindestens einer zweiten Scheibe (TR2), wobei die zweite Scheibe (TR2) einem zweiten elementaren Dienst einer Gruppe von Diensten zugeordnet ist, abhängig von mindestens einer Änderung (310) eines ersten Konfigurationsparameters einer ersten Scheibe (TR1), die einem ersten elementaren Dienst der Gruppe von Diensten zugeordnet ist.

2. Verfahren nach Anspruch 1, wobei die Änderung (315) des mindestens einen zweiten Konfigurationsparameters der mindestens einen zweiten Netzwerkscheibe (TR2) ausgeführt wird, sobald ein erster Konfigurationsparameter einer ersten Netzwerkscheibe (TR1) geändert wird.

3. Verfahren nach einem der vorhergehenden Ansprüche, wobei das synchronisierte Anpassungsverfahren außerdem enthält:
- eine Erkennung einer Änderung (310) eines ersten Konfigurationsparameters einer ersten Netzwerkscheibe (TR1), die einem ersten elementaren Dienst der Gruppe von Diensten zugeordnet ist, wobei die Erkennung die Änderung (315) des mindestens einen zweiten Konfigurationsparameters der mindestens einen zweiten Netzwerkscheibe (TR2) auslöst.

4. Verfahren nach einem der vorhergehenden Ansprüche, wobei die Änderung (315) eine Identifizierung einer vorbestimmten Änderungsregel aufweist, die mit einer Änderung (310) eines ersten Konfigurationsparameters einer ersten Netzwerkscheibe (TR1) verbunden ist, die geeignet ist, verwendet zu werden, um einen zweiten Konfigurationsparameter einer zweiten Netzwerkscheibe (TR2) zu ändern.

5. Verfahren nach einem der vorhergehenden Ansprüche, wobei das Verfahren außerdem aufweist:
- Ändern mindestens eines dritten Konfigurationsparameters mindestens einer dritten Netzwerkscheibe (TR3), wobei die dritte Netzwerkscheibe (TR3) einem dritten elementaren Dienst der Gruppe von Diensten zugeordnet ist, abhängig von mindestens einer Änderung eines ersten Konfigurationsparameters einer ersten Netzwerkscheibe (TR1), der einem ersten elementaren Dienst der Gruppe von Diensten zugeordnet ist.

6. Verfahren nach einem der vorhergehenden Ansprüche, wobei der erste Konfigurationsparameter unter einer Dienstqualität (QoS), einem Sicherheitsgrad, Dienstkosten, einer Übertragungsrate, einer Latenz, einer Anzahl von verbundenen Objekten, einer Aktivierung/Deaktivierung ausgewählt wird.

7. Verfahren nach einem der vorhergehenden Ansprüche, wobei die Änderung unter Verwendung mindestens einer Anpassungsfunktion unter einer Funktion vom arithmetischen Typ, einem Maximum, einem Minimum, einem Vorhandensein von Bedingungen, einer Funktion vom Booleschen Typ ausgeführt wird.

8. Verfahren nach einem der vorhergehenden Ansprüche, wobei die Änderung unter Verwendung einer unidirektionalen oder bidirektionalen Anpassungsfunktion ausgeführt wird.

9. Verfahren nach Anspruch 8, wobei die bidirektionale Funktion durch zwei unterschiedliche Gruppen von vorbestimmten Änderungsregeln oder durch eine einzige Gruppe von vorbestimmten Änderungsregeln definiert wird.

10. Vorrichtung (700) zur synchronisierten Anpassung einer virtuellen Untereinheit eines Telekommunikationsnetzwerks (R), "Netzwerkscheibe" genannt, die einem elementaren Dienst einer Gruppe von Diensten zugeordnet ist, wobei ein globaler Dienst aus mehreren elementaren Diensten besteht, denen unterschiedliche Scheiben zugeordnet sind, wobei das Telekommunikationsnetzwerk (R) eine Vielzahl von Scheiben des Netzwerks (TR1, TR2, TR3) enthält, wobei die Scheiben (TR1, TR2, TR3) gemäß einer Vielzahl von Konfigurationsparametern (P_{TR1}(i), P_{TR2}(j), P_{TR3}(q)) parametriert sind, wobei die Anpassungsvorrichtung (700) einen Modifikator mindestens eines zweiten Konfigurationsparameters mindestens einer zweiten Scheibe (TR2) aufweist, wobei die zweite Scheibe (TR2) einem zweiten elementaren Dienst einer Gruppe von Diensten zugeordnet ist, abhängig von mindestens einer Änderung (310) eines ersten Konfigurationsparameters einer ersten Scheibe (TR1), die einem ersten elementaren Dienst der Gruppe von Diensten zugeordnet ist.

11. Vorrichtung (700) nach Anspruch 10, wobei die Anpassungsvorrichtung (700) außerdem eine Eingangsschnittstelle (707) aufweist, um eine oder mehrere Änderungsdaten von Konfigurationsparametern von Netzwerkscheiben zu erfassen.

12. Vorrichtung (700) nach einem der Ansprüche 10 oder 11, wobei die Anpassungsvorrichtung (700) außerdem eine Ausgangsschnittstelle (709) aufweist, um Konfigurationsparameter von Netzwerkscheiben zu ändern, um ein oder mehrere Änderungsdaten von Konfigurationsparametern von Netzwerkscheiben eines Telekommunikationsnetzwerks (R) zu erfassen.

13. Vorrichtung (700) nach einem der Ansprüche 10 bis 12, wobei die Anpassungsvorrichtung (700) eine für die Durchführung der Schritte des Verfahrens nach einem der Ansprüche 1 bis 9 konfigurierte Verarbeitungsschaltung (703) aufweist, die den Modifikator implementiert.

14. Computerprogramm, das Programmcodeanweisungen enthält, deren Ausführung durch eine Verarbeitungsschaltung einer Anpassungsvorrichtung die Vorrichtung konfiguriert, die Schritte des Verfahrens nach einem der Ansprüche 1 bis 9 durchzuführen.

15. Nicht-transienter Speicherträger, lesbar von einer Vorrichtung zur synchronisierten Anpassung, auf dem Codeanweisungen eines Computerprogramms gespeichert sind, wobei die Codeanweisungen, wenn sie von einer Verarbeitungsschaltung der Vorrichtung zur synchronisierten Anpassung ausgeführt werden, die Vorrichtung zur synchronisierten Anpassung konfigurieren, die Schritte des Verfahrens nach einem der Ansprüche 1 bis 9 durchzuführen.

## Claims

1. Method for the synchronized adaptation of a virtual subset of a telecommunication network (R) referred to as a "network slice", dedicated to an elementary service of a set of services, a more encompassing service being composed of several elementary services to which separate respective slices are dedicated, the telecommunication network (R) comprising a plurality of network slices (TR1, TR2, TR3), said slices (TR1, TR2, TR3) being configured according to a plurality of configuration parameters (P_{TR1}(i), P_{TR2}(j), P_{TR3}(q)), the method comprising at least:
- modifying (315) at least one second configuration parameter of at least one second slice (TR2), said second slice (TR2) being dedicated to a second elementary service of a set of services, on the basis of at least one modification (310) of a first configuration parameter of a first slice (TR1) dedicated to a first elementary service of the set of services.

2. Method according to claim 1, wherein the modification (315) of the at least one second configuration parameter of the at least one second network slice (TR2) is carried out as soon as a first configuration parameter of a first network slice (TR1) is modified.

3. Method according to any preceding claim, wherein the method for synchronized adaptation further comprises:
- detecting a modification (310) of a first configuration parameter of a first network slice (TR1) dedicated to a first elementary service of the set of services, this detection triggering the modification (315) of the at least one second configuration parameter of the at least one second network slice (TR2).

4. Method according to any preceding claim, wherein the modification (315) comprises an identification of a predetermined modification rule associated with a modification (310) of a first configuration parameter of a first network slice (T31), suitable for being used to modify a second configuration parameter of a second network slice (TR2).

5. Method according to any preceding claim, wherein the method further comprises:
- modifying at least one third configuration parameter of at least one third network slice (TR3), said third network slice (TR3) being dedicated to a third elementary service of the set of services, on the basis of at least one modification of a first configuration parameter of a first network slice (TR1) dedicated to a first elementary service of the set of services.

6. Method according to any one of the preceding claims, wherein the first configuration parameter is selected among: a quality of service (QoS), a level of security, a cost of service, a speed, a latency, a number of connected objects, an activation/deactivation.

7. Method according to any one of the preceding claims, wherein the modification is carried out using at least one adaptation function among: an arithmetic function, a maximum, a minimum, a presence of conditions, a Boolean function.

8. Method according to any one of the preceding claims, wherein the modification is carried out using a one-way or two-way adaptation function.

9. Method according to claim 8, wherein the two-way adaptation function is defined by two different sets of predetermined modification rules, or by a single set of predetermined modification rules.

10. Device (700) for synchronized adaptation of a virtual subset of a telecommunication network (R) referred to as a "network slice", dedicated to an elementary service of a set of services, a more encompassing service being composed of several elementary services to which separate respective slices are dedicated, the telecommunication network (R) comprising a plurality of network slices (TR1, TR2, TR3), said slices (TR1, TR2, TR3) being configured according to a plurality of configuration parameters (P_{TR1}(i), P_{TR2}(j), P_{TR3}(q)), the adaptation device (700) comprising a modifier of at least one second configuration parameter of at least one second slice (TR2), said second slice (TR2) being dedicated to a second elementary service of a set of services, on the basis of at least one modification (310) of a first configuration parameter of a first slice (TR1) dedicated to a first elementary service of the set of services.

11. Device (700) according to claim 10, the adaptation device (700) further comprising an input interface (707) for acquiring one or more configuration parameter modification data items for network slices.

12. Device (700) according to either of claims 10 and 11, the adaptation device (700) further comprising an output interface (709) for modifying network slice configuration parameters in order to acquire one or more configuration parameter modification data items for network slices of a telecommunication network (R).

13. Device (700) according to any one of claims 10 to 12, the adaptation device (700) comprising a processing circuit (703) configured to implement the steps of the method according to any of Claims 1 to 9 and implementing the modifier.

14. Computer program comprising program code instructions execution of which by a processing circuit of an adaptation device configures said device to implement the steps of the method according to any one of claims 1 to 9.

15. Non-transitory storage medium readable by a device for synchronized adaptation on which are stored the code instructions of a computer program, said code instructions, when they are executed by a processing circuit of the device for synchronized adaptation, configuring the device for synchronized adaptation to implement the steps of the method according to any one of claims 1 to 9.
